(19) Europäisches Patentamt / European Patent Office / Office européen des brevets

(11) **EP 4 421 035 A1**

(12) **EUROPEAN PATENT APPLICATION**
published in accordance with Art. 153(4) EPC

(43) Date of publication:
**28.08.2024 Bulletin 2024/35**

(21) Application number: **22883380.2**

(22) Date of filing: **07.10.2022**

(51) International Patent Classification (IPC):
***C01B 33/18*** (2006.01)

(52) Cooperative Patent Classification (CPC):
**C01B 33/18; C08K 3/36**

(86) International application number:
**PCT/JP2022/037587**

(87) International publication number:
**WO 2023/068076 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 JP 2021171457**

(71) Applicant: **Denka Company Limited
Tokyo 103-8338 (JP)**

(72) Inventors:
• **OKABE, Takuto
Tokyo 103-8338 (JP)**
• **FUKAZAWA, Motoharu
Tokyo 103-8338 (JP)**

(74) Representative: **Kraus & Lederer PartGmbB
Thomas-Wimmer-Ring 15
80539 München (DE)**

(54) **METHOD FOR PRODUCING SPHERICAL SILICA PARTICLES**

(57) The present invention provides a method for producing spherical silica particles that can achieve lower dielectric dissipation factors when used to fill a resin. The present invention is a method for producing spherical silica particles (X), including a step of classifying amorphous spherical silica particles (A), followed by a step of performing a heat treatment at 800-1200 °C. The classifying step preferably includes wet classification. Additionally, the classifying step preferably includes removing foreign substances from surfaces of the spherical silica particles (A). The spherical silica particles (A) are preferably amorphous spherical silica particles obtained by a powder melting method.

[FIG. 1]

EP 4 421 035 A1

**Description**

**TECHNICAL FIELD**

The present invention relates to a method for producing spherical silica particles.

**BACKGROUND ART**

In recent years, with increasing information traffic in the communication field, the utilization of signals in high frequency bands has been spreading among electronic devices, communication equipment, etc. However, there have also been problems in that applying signals in high frequency bands to the aforementioned equipment increases the transmission loss of circuit signals. For this reason, materials having low dielectric dissipation factors are sought as materials to be used in devices for use in high frequency bands. Transmission loss, largely divided, is comprised of conductor loss due to the skin effect in wiring, and dielectric loss due to the properties of dielectric materials in insulators constituting electric/electronic components, such as substrates. Dielectric loss is proportional to the first power of the frequency, to the square root of the dielectric constant of an insulator, and to the first power of the dielectric dissipation factor. Thus, in the materials used in equipment for use in high frequency bands, both a low dielectric constant and a low dielectric dissipation factor are sought.

The dielectric properties of GHz-band ceramic materials are described, for example, in Non-Patent Document 1, etc. However, all of the properties are for sintered substrates. Silica particles have a relatively low dielectric constant and have a quality factor index Qf (the value obtained by multiplying the inverse of the dielectric dissipation factor with the measurement frequency) of approximately 120,000. Thus, they show promise as ceramic fillers having a low dielectric constant and a low dielectric dissipation factor. From the aspect of easily blending them into resins, their shapes are preferably as close to spherical as possible. Spherical silica particles can be produced, for example, by the flame fusion method, etc. (Patent Document 1). The application of spherical silica particles synthesized by such methods to the abovementioned devices for use in high frequency bands is anticipated.

Many polar functional groups such as silanol groups and adsorbed water are present on the surfaces of spherical silica particles, and there is a problem in that the dielectric dissipation factor tends to become worse. While methods for reducing silanol groups and adsorbed water on the surfaces of spherical silica particles include those described, for example, in Patent Documents 2 to 4, the spherical silica particles obtained by these methods have insufficient dielectric dissipation factor reduction effects.

Patent Document 1: WO 2016/031823 A1

Patent Document 2: JP 2926348 B

Patent Document 3: JP 2020-097498 A

Patent Document 4: JP 2020-138880 A

Non-Patent Document 1: International Materials Reviews, Vol. 60, No. 70, Supplementary data (2015)

**SUMMARY OF INVENTION**

Thus, the present invention has the purpose of providing a method for producing spherical silica particles that can achieve a lower dielectric dissipation factor when used to fill a resin.

The present inventors performed diligent investigation, as a result of which they discovered that spherical silica particles that can solve the above-mentioned problem can be obtained by removing fine particles from amorphous spherical silica particles, then heat-treating the spherical silica particles under high temperature conditions, thereby completing the present invention.

That is, the present invention has the embodiments below.

[1] A method for producing spherical silica particles (X), including a step of classifying amorphous spherical silica particles (A), followed by a step of performing a heat treatment at 800-1200 °C.

[2] The method for producing spherical silica particles (X) according to [1], wherein the classifying step includes wet classification.

[3] The method for producing spherical silica particles (X) according to [1] or [2], wherein the classifying step includes classifying the spherical silica particles (A) and preparing spherical silica particles (B) having a surface fractal dimension of 1.0-2.3.

[4] The method for producing spherical silica particles (X) according to any one of [1] to [3], wherein the classifying step includes removing foreign substances from surfaces of the spherical silica particles (A).

[5] The method for producing spherical silica particles (X) according to any one of [1] to [4], wherein the spherical silica particles (A) are amorphous spherical silica particles obtained by a powder melting method.

[6] The method for producing spherical silica particles (X) according to any one of [1] to [5], wherein the classifying step involves wet classification, and the wet classification is performed by using a slurry containing the spherical silica particles (A) and a dispersion medium including at least water.

[7] The method for producing spherical silica particles (X) according to any one of [1] to [6], wherein the spherical silica particles (X) have a specific surface area of 0.1-2.0 $m^2$/g.

[8] The method for producing spherical silica particles according to any one of [1] to [7], wherein the average particle diameters and the specific surface areas of the spherical silica particles (A) and the spherical silica particles (X) satisfy the following conditions (1) and (2):

condition (1), that a ratio ((D×50)/(Da50)) of the average particle diameter (D×50) of the spherical silica particles (X) to the average particle diameter (Da50) of the spherical silica particles (A) is 0.8 or higher and 1.2 or lower; and
condition (2), that a ratio ((Sx)/(Sa)) of the specific surface area (Sx) of the spherical silica particles (X) to the specific surface area (Sa) of the spherical silica particles (A) is 0.2 or higher and 0.6 or lower.

According to the present invention, it is possible to provide a method for producing spherical silica particles that can achieve a lower dielectric dissipation factor when used to fill a resin.

**BRIEF DESCRIPTION OF DRAWINGS**

FIG. 1 is an electron microscope photograph representing one embodiment of a spherical silica particle (X) obtained by the production method of the present invention.

FIG. 2 is an electron microscope photograph of an amorphous spherical silica particle (A) before a classification process.

**DESCRIPTION OF EMBODIMENTS**

Hereinafter, the present invention will be explained in detail. However, the present invention is not limited to the embodiments below, and can be implemented by adding modifications, as appropriate, within a range not inhibiting the effects of the present invention. In cases in which a specific explanation provided regarding one embodiment also applies to another embodiment, the explanation may be omitted for the other embodiment. In the present specification, "-" with regard to numerical ranges means "... or more and ... or less". For example, "800-1200 °C" means 800 °C or higher and 1200 °C or lower. Additionally, the term "silica particles" in the present disclosure refers to an aggregate of multiple particles.

[Method for producing spherical silica particles (X)]

The method for producing amorphous spherical silica particles (X) according to the present invention includes a step of classifying amorphous spherical silica particles (A) (step (i)), followed by a step of performing a heat treatment at 800-1200 °C (step (ii)). The spherical silica particles (X) produced by such a method can achieve a lower dielectric dissipation factor when used to fill a resin. Additionally, the method for producing spherical silica particles according to the present invention may include a step of preparing amorphous spherical silica particles (A) (step (i')).

<Preparation Step: Step (i')>

The method for producing spherical silica particles (X) according to the present invention may include a step (i') for preparing amorphous spherical silica particles (A) (hereinafter also referred to as "spherical silica particles (A)").

As the spherical silica particles (A), those prepared by conventionally known methods may be used. From the aspect of productivity, those prepared by a powder melting method are preferable. In the production method according to the present invention, step (i') may be a step of preparing spherical silica particles (A) by a powder melting method. In the present invention, "amorphous spherical silica particles" refer to spherical silica particles having a silica purity of 98% or higher, and in which the amorphous phase constitutes 95 mass% or more of the whole. Additionally, the silica particles being "spherical" means that, when the silica particles are observed with a microscope, etc., the projections thereof (including three-dimensional diagrams and planar diagrams) have shapes that are approximately circular.

The powder melting method is a method for using flames, a plasma, an electric furnace, a gas furnace, etc. to melt and to form spheres from crushed silica stone, silica sand, etc. (hereinafter sometimes referred to as "crude raw material") under high-temperature conditions equal to or higher than the melting point of the crude raw material. Although the melting atmosphere is not particularly limited, from an economic aspect, the melting is preferably performed in an air atmosphere. The average particle diameter of the crude raw material is preferably 0.1-100 $\mu$m, more preferably 0.2-50 $\mu$m, and even more preferably 0.3-10 $\mu$m. In one embodiment, the average particle diameter of the crude raw material may be 10-100 $\mu$m, and may be 50-100 $\mu$m. The "average particle diameter" in the present description refers to the particle diameter (D50) corresponding to a cumulative value of 50% in a volume-based cumulative particle size distribution measured by using a laser diffraction-type particle size distribution measurement device.

The average particle diameter (D50) of the spherical silica particles (A) (hereinafter referred to as "average particle diameter (Da50)") is preferably 1-30 $\mu$m, more preferably 1-15 $\mu$m. In one embodiment, the average particle diameter (Da50) may be 1-10 $\mu$m, or may be 2-8 $\mu$m. Additionally, the average circularity should preferably be 0.85 or higher, and more preferably 0.90 or higher from the aspect of being able to more easily obtain spherical silica particles (X) having shapes that are closer to that of a perfect circle (i.e., spherical silica particles (X) having a preferable average circularity of 0.85 or higher). Additionally, the specific surface area of the spherical silica particles (A) (hereinafter referred to as "specific surface area (Sa)") is not particularly defined, and may, for example, be 0.1-10 m$^2$/g. The average particle diameter (Da50), the average circularity, and the specific surface area (Sa) of the spherical silica particles (A) can be measured by the methods indicated below.

After obtaining the spherical silica particles (A) by performing step (i') as needed, the spherical silica particles (A) are classified as described below.

<Classification Step: Step (i)>

The method for producing spherical silica particles (X) according to the present invention includes a step (i) for classifying the spherical silica particles (A). Step (i) is a step of introducing the spherical silica particles (A) into a classification apparatus and centrifugally separating the particles at a fixed circumferential velocity, thereby removing fine particles from the spherical silica particles (A). As the classification apparatus, for example, a gravity classifier, a centrifugal classifier, etc. may be used. In the present description, the silica particles obtained after step (i) will be referred to as "spherical silica particles (B)".

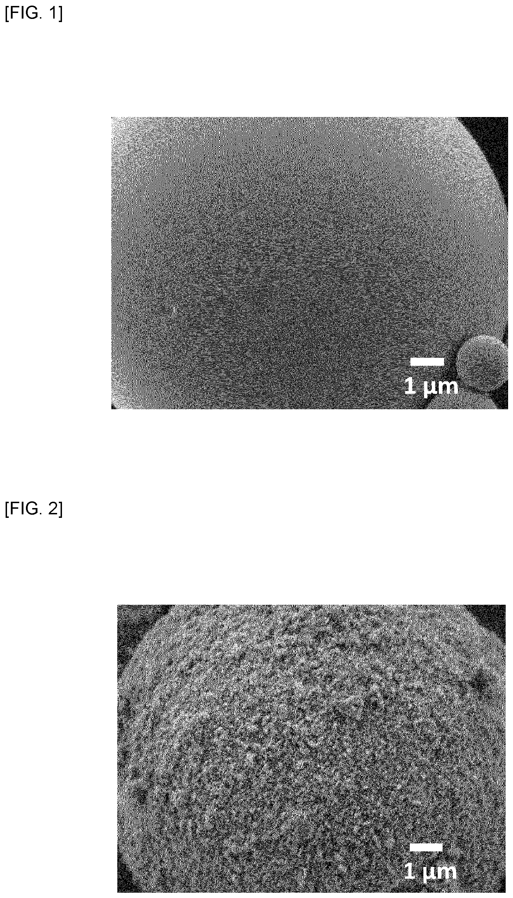

Step (i) is preferably a step of removing fine particles that are 0.9 $\mu$m or less included among the spherical silica particles (A). Additionally, step (i) is preferably a step that includes removing foreign substances on the surfaces of the spherical silica particles. The expression "foreign substances on the surfaces of the spherical silica particles (A)" refers to fine particles adhered to the surfaces of the spherical silica particles (A), as shown, for example, in FIG. 2. In step (i), spherical silica particles (X) having few unevenness on the surfaces and having a small specific surface area can be obtained by removing fine particles, etc. adhered to the particle surfaces of the spherical silica particles (A). In such spherical silica particles (X), the absolute amounts of polar functional groups such as silanol groups and adsorbed water are small, and lower dielectric dissipation factors can be achieved.

Step (i) may be a step of removing foreign substances from the surfaces of the spherical silica particles (A) and reducing the specific surface area of the spherical silica particles (A). In one embodiment, the ratio ((Sb)/(Sa)) of the specific surface area (Sb) of the spherical silica particles (B) obtained after step (i) to the specific surface area (Sa) of the spherical silica particles (A) may be 0.2 or higher and 0.6 or lower, and may be 0.3 or higher and 0.6 or lower.

In the production method according to the present invention, step (i) may be a step of classifying the spherical silica particles (A) to obtain spherical silica particles (B) having a surface fractal dimension of 1.0-2.3. The "surface fractal dimension" is an index indicating the level of surface unevenness of a particle. The lower the numerical value of the surface fractal dimension (Ds) is, the fewer the unevenness on the particle surface, and the smoother the surface is. In the method for producing spherical silica particles (X) according to the present invention, the surface fractal dimension of the spherical silica particles (B) after classification should preferably be 1.0-2.3, more preferably 1.0-2.1, and even more preferably 1.0-1.9. The surface fractal dimension of the spherical silica particles can be measured by the method below.

<Method of Measuring Surface Fractal Dimension>

The spherical silica particles are set, as is, in a transmission-measuring sample cell of an X-ray diffraction apparatus (for example, product name: SmartLab, manufactured by Rigaku Corp.) and the particles are measured under the conditions indicated below by ultra-small angle X-ray scattering (USAXS). Additionally, at the time of analysis, background removal and desmearing are performed. The desmearing process is performed by using analysis software (for example, product name: Particle size and pore size analysis software NANO-Solver, manufactured by Rigaku Corp.).

X-ray tube: Cu K$\alpha$

Tube voltage/tube current: 45 kV/200 mA

Detector: Scintillation counter

Scanning range: 0.00-0.50 deg

Scanning steps: 0.0006 deg

Scanning speed: 0.03 deg/min

Incident-side analyzing crystals: Ge(220) $\times$ 2

Reception-side analyzing crystals: Ge(220) $\times$ 2

<Method of Calculating Surface Fractal Dimension>

The surface fractal dimension is calculated by the method below. First, formula (2) below is used to convert the scattering angle 2θ to the scattering vector q. The measuring X-ray wavelength λ is 0.154 nm.

$$q = 4\pi\sin\theta/\lambda \quad \ldots (2)$$

Next, a double logarithmic graph indicating the relationship between the scattering vector q and the intensity I(q) for the background-removed and desmeared USAXS pattern is prepared, and a power approximation is performed for q = 0.0124-0.0627 nm$^{-1}$ (2θ = 0.174-0.0882°). The exponential part α of this approximation formula is substituted into the following formula (3) to calculate the surface fractal dimension (Ds).

$$Ds = 6 + \alpha \quad \ldots (3)$$

Step (i) may be a step of removing fine particles from the spherical silica particles (A) by dry classification, or may be a step of removing fine particles from the spherical silica particles (A) by wet classification. Wet classification is preferable from the aspect of efficiently removing particles that are 0.9 $\mu$m or less.

(Wet classification)

Step (i) may be a step of removing fine particles from the spherical silica particles (A) by wet classification. Conventionally, methods for producing silica particles with reduced amounts of silanol groups and adsorbed water have been proposed as methods for improving the dielectric dissipation factors of silica particles (for example, Patent Documents 2-4, etc.). In these production methods, it is essential to avoid coming into contact with moisture as much as possible during the production process, or to include a step of controlling the moisture amount. The present inventors discovered that the absolute amounts of polar functional groups such as silanol groups and adsorbed water can be reduced by removing fine particles from the raw material silica particles, particularly by removing fine particles adhered to the silica particle surfaces. More surprisingly, they discovered that, by performing this step of removing fine particles under wet conditions, the dielectric dissipation factors of the finally obtained spherical silica particles (X) do not become worse, and conversely, spherical silica particles (X) having lower dielectric dissipation factors tend to be obtained.

In the case in which step (i) involves wet classification, a slurry including the spherical silica particles (A) and a dispersion medium is introduced into the classification apparatus and fine particles are removed from the spherical silica particles (A). As the classification apparatus, for example, a gravity classifier, a centrifugal classifier, etc. may be employed.

Dispersion medium include, for example, water (including purified water, ionexchanged water, etc.) and organic solvents such as ethanol and acetone. Among these, water is preferably included as a dispersion medium from an economic aspect and for ease of dispersion of the spherical silica particles (A).

The percentage of water in the dispersion medium should preferably be 50-100 mass% relative to the total mass of the dispersion medium. Additionally, the concentration of the spherical silica particles (A) in the slurry should preferably be 1-50 mass%, and more preferably 20-40 mass% relative to the total mass of the slurry.

Slurry preparation methods include, for example, a method of introducing the spherical silica particles (A) into the dispersion medium so as to have a desired solid concentration, then stirring the slurry for 1-24 hours at room temperature.

In the case in which the classifier described in the examples below is used, the circumferential velocity of the rotor at the time of wet classification should preferably be 10-30 m/s, and more preferably 20-30 m/s from the aspect of efficiently classifying the fine particles.

Additionally, although the temperature at the time of wet classification is not particularly limited, room temperature is preferable from an economic aspect.

In the case in which step (i) involves wet classification, the classified slurry is placed at rest and the supernatant is removed to obtain spherical silica particles (B). Thereafter, as indicated below, a heat treatment is further performed to prepare the spherical silica particles (X). Step (ii) may be preceded by a process for drying the spherical silica particles (B) at 40-200 °C for 1-24 hours. The particles may also be dried in a vacuum.

<Heat Treatment Step: Step (ii)>

The method for producing spherical silica particles (X) according to the present invention includes, after step (i), further performing a heat treatment at a temperature of 800-1200 °C. In step (ii), the heating temperature of the spherical silica particles (B) is 800-1200 °C, preferably 900-1100 °C. By performing a heat treatment at a high temperature of 800-1200 °C, adsorbed water, etc. can be removed from the spherical silica particles (B), thereby obtaining spherical silica particles (X) that can achieve a low dielectric dissipation factor. However, if the temperature during the heat treatment exceeds 1200 °C, the dielectric dissipation factor tends to become worse because fusion, etc. of the particles reduces dispersibility of the obtained spherical silica particles (X) in resins and/or defects in the silica structure increase, etc. In one embodiment, the amount of water molecules that are desorbed (desorbed water molecular weight) when heating the spherical silica particles (X) obtained by the production method according to the present invention from 50 °C to 1000 °C at a temperature increase rate of 25 °C/min may be 0.010 mmol/g or less. Additionally, the lower limit value of the desorbed water molecular weight may be set to be 0.001 mmol/g or more. The amount of water molecules desorbed from the spherical silica particles (X) can be measured by the method below.

<Method of Measuring Desorbed Water Molecular Weight>

A gas chromatography/mass spectrometry apparatus (for example, product name: JMS-Q1500GC, manufactured by JEOL Ltd.) and a thermolysis apparatus (for example, product name: PY-3030D, manufactured by Frontier Laboratories Ltd.) are used to raise the temperature of 15 μg of spherical silica particles from 50 °C to 1000 °C at a temperature increase rate of 25 °C/min in a helium atmosphere. From an obtained mass chromatogram (m/z = 18), an area value in the range from 50 °C to 1000 °C is calculated, and the number of desorbed water molecules is calculated from a calibration line. As the calibration line, area values for the number of desorbed water molecules (m/z = 18) in aluminum hydroxide samples (for example, product name: aluminum hydroxide, manufactured by Kojundo Chemical Laboratory Co., Ltd.) serving as reference samples are used. Specifically, a calibration line can be prepared by precisely weighing out to 23 μg, 122 μg, and 270 μg of aluminum hydroxide samples by using a microbalance, raising the temperatures under the same conditions as those described above, and measuring the area values of water molecules desorbed from the aluminum hydroxide. The amounts of water on the aluminum hydroxide are values calculated from the decrease in mass from 200 °C to 320 °C by a high-sensitivity differential-type thermal gravimeter.

In step (ii), for example, an electric furnace, a gas furnace, etc. can be used as the heating apparatus. Additionally, step (ii) is preferably performed in a nitrogen or argon atmosphere, or in a vacuum atmosphere, from the aspect of reducing the dielectric dissipation factor. Additionally, the heating time is preferably 1-24 hours, and more preferably 2-8 hours. If the heating time is 1-24 hours, then the productivity also tends to be good. In one embodiment, step (ii) may involve heating the spherical silica particles (B) at 800-1200 °C for 1-24 hours, or may involve heating the spherical silica particles (B) at 800-1200 °C for 2-8 hours.

The spherical silica particles (X) are prepared by a method including the aforementioned steps (i) and (ii) (or a method including step (i'), step (i), and step (ii) as needed). After step (ii), the spherical silica particles (X) may be surface-treated with a surface treatment agent as needed. By surface-treating the spherical silica particles (X) with a surface treatment agent, the filling performance of the spherical silica particles (X) in resins tends to be good. Additionally, polar functional groups, etc. on the particle surfaces tend to be reduced, and spherical silica particles (X) with a lower dielectric dissipation factor tend to be obtained.

The surface treatment agent includes, for example, silane coupling agents, aluminate coupling agents, etc. These may be used as one type alone or by using a combination of two or more types. Among these, from the viewpoint of facilitating the reduction of polar functional groups, etc. on the particle surfaces, treatment with a silane coupling agent is preferable, and the use of a silane coupling agent having silazanes such as hexamethyldisilazane (HMDS) or vinyl groups such as vinyltrimethoxysilane is more preferable.

The spherical silica particles (X) obtained after step (i) or step (ii), or after an arbitrary surface treatment step, are sometimes in the form of aggregates. Thus, after these steps, a crushing treatment may be performed as needed. The crushing method is preferably performed under dry conditions not coming into contact with water, and for example, an agate mortar, a ball mill, a vibration mill, a jet mill, etc. may be employed.

The spherical silica particles (X) obtained by the production method according to the present invention have, for example, surface structures as indicated in FIG. 1. Meanwhile, FIG. 2 is an electron microscope photograph indicating one embodiment of an amorphous spherical silica particle (spherical silica particle (A)) before classification. As is clear by comparing FIG. 1 and 2, a large amount of extremely fine foreign substances (fine particles) are adhered to the surface of the spherical silica particle (A), and these fine foreign substances cause the specific surface area (Sa) of the spherical silica particle (A) to become large. According to the production method of the present invention, step (i) causes the fine foreign substances on the surfaces of the spherical silica particles (A) to become more easily removable, and as a result thereof, spherical silica particles (X) with few foreign substances on the surfaces and with small specific surface areas, as shown in FIG. 1, can be obtained. In one embodiment, the specific surface area (Sx) of the spherical silica particles (X) may be 0.1-2.0 $m^2$/g, and may be 0.5-2.0 $m^2$/g. Such spherical silica particles (X) with few foreign substances on the surfaces and with small specific surface areas have low absolute numbers of polar functional groups and adsorbed water on the particle surfaces, and therefore tend to achieve low dielectric dissipation factors when used to fill resins. That is, the production method according to the present invention is, more preferably, a method satisfying the conditions (1) and (2) below.

Condition (1): The ratio ((D×50)/(Da50)) of the average particle diameter (D×50) of the spherical silica particles (X) to the average particle diameter (Da50) of the spherical silica particles (A) is 0.8 or higher and 1.2 or lower.

Condition (2): The ratio ((Sx)/(Sa)) of the specific surface area (Sx) of the spherical silica particles (X) to the specific surface area (Sa) of the spherical silica particles (A) is 0.2 or higher and 0.6 or lower.

By satisfying conditions (1) and (2), spherical silica particles (X) with small specific surface areas can be more easily obtained while maintaining the range of the average particle diameter (Da50) of the spherical silica particles (A).

[Spherical silica particles (X)]

Due to the production method according to the present invention, spherical silica particles (X) that can achieve a lower dielectric dissipation factor can be obtained. In one embodiment, the dielectric constant at 35 GHz in a resin sheet including spherical silica particles (X) prepared by the method described below is preferably 3.0 or lower. Additionally, the dielectric dissipation factor at 35 GHz of the aforementioned resin sheet is preferably lower than $4.8 \times 10^{-4}$, more preferably $4.5 \times 10^{-4}$ or lower, and even more preferably $4.0 \times 10^{-4}$ or lower.

The average particle diameter (D×50) of the spherical silica particles (X) obtained by the production method according to the present invention can be set to be within the range 1-30 $\mu$m. Additionally, the average circularity thereof can be set to be 0.85 or higher. Additionally, the average particle density can be set to be 1.8-2.4 $g/cm^3$. The method for measuring the average circularity and the average particle density will be described below.

[Use]

The spherical silica particles (X) obtained by the production method according to the present invention can achieve a lower dielectric dissipation factor when used to fill a resin. For this reason, they can be favorably used as fillers in resin materials.

[Resin composition]

The resin composition according to the present invention includes spherical silica particles (X) prepared by the aforementioned production method and at least one resin selected from among thermoplastic resins and thermosetting resins.

The spherical silica particle (X) content in the resin composition is not particularly limited, and may be adjusted in accordance with the purpose. For example, in the case of use in an insulating material or in a substrate material for use in high frequency bands, they may be blended within the range 1-95 mass%, more preferably within the range 10-80 mass% relative to the total mass of the resin composition.

<Resin>

The resin composition according to the present invention includes at least one resin selected from among thermoplastic resins and thermosetting resins. More specifically, examples include polyethylene resins; polypropylene resins; epoxy resins; silicone resins; phenol resins; melamine resins; urea resins; unsaturated polyester resins; fluoroesins; polyamide-based resins such as polyimide resins, polyamideimide resins, and polyetherimide resins; polyester-based resins such as polybutylene terephthalate resins and polyethylene terephthalate resins; polyphenylene sulfide resins; aromatic polyester resins; polysulfone resins; liquidcrystal polymer resins; polyethersulfone resins; polycarbonate resins; maleimidemodified resins; ABS resins; AAS (acrylonitrile/acrylic rubber/styrene) resins; AES (acrylonitrile/ethylene/propylene/diene rubber/styrene) resins; hydrocarbon-based elastomer resins; polyphenylene ether resins; aromatic polyene-based resins; etc. These may be used as a single type alone or as a combination of two or more types.

When the resin composition according to the present invention is to be used as an insulating material or a substrate material for use in high frequency bands, a known low-dielectric resin that can be used for the present use may be employed. Specifically, as the low-dielectric resin, at least one resin selected from among hydrocarbon-based elastomer resins, polyphenylene ether resins, and aromatic polyene-based resins may be used. Among these, a hydrocarbon-based elastomer resin or a polyphenylene ether resin is preferable.

A curing agent, a curing promoter, a mold release agent, a coupling agent, a colorant, a flame retardant, an ion sequestrant, etc. may be blended into the resin composition according to the present invention within a range not inhibiting the effects of the present invention.

<Method of Producing Resin Composition>

The method of producing the resin composition is not particularly limited, and it can be produced by stirring, melting, mixing, or dispersing prescribed amounts of the respective materials. Although the apparatus used for mixing, stirring, dispersing, etc. these mixtures is not particularly limited, a mortar machine, a three roll mill, a ball mill, a planetary mixer, etc. provided with stirring and heating apparatuses can be used. Additionally, these apparatuses may be used by being combined as appropriate.

As mentioned above, the resin composition containing spherical silica particles (X) can achieve a low dielectric constant and a lower dielectric dissipation factor. Additionally, the resin composition containing spherical silica particles (X) according to the present invention has low viscosity, and therefore has good flowability and also has excellent moldability.

**EXAMPLES**

Hereinafter, the present invention will be explained in detail by indicating examples. However, the present invention is not to be construed as being limited by the descriptions below.

As the spherical silica particles (A), the spherical silica particles (A-1) (product name: FB-5D, manufactured by Denka Co., Ltd., specific surface area 2.3 $m^2$/g) and the spherical silica particles (A-2) (product name: FB-3SDC, manufactured by Denka Co., Ltd., specific surface area 3.3 $m^2$/g) indicated in Table 1 were prepared. The average circularities, the average particle densities, the average particle diameters, the specific surface areas, and the desorbed water molecular weights of the spherical silica particles (A-1) and (A-2), and the dielectric constants and the dielectric dissipation factors when forming resin sheets, are values measured in accordance with the methods described below.

[Table 1]

| | | SPHERICAL SILICA PARTICLES (A-1) | SPHERICAL SILICA PARTICLES (A-2) |
|---|---|---|---|
| AVERAGE CIRCULARITY | (-) | 0.95 | 0.94 |
| AVERAGE PARTICLE DENSITY | (g/cm$^3$) | 2.2 | 2.2 |

(continued)

|  | | SPHERICAL SILICA PARTICLES (A-1) | SPHERICAL SILICA PARTICLES (A-2) |
|---|---|---|---|
| AVERAGE PARTICLE DIAMETER | ($\mu$m) | 4.9 | 3.1 |
| SPECIFIC SURFACE AREA | ($m^2$/g) | 2.3 | 3.3 |
| DESORBED WATER MOLECULAR WEIGHT | (mmoL/g) | 0.034 | 0.051 |
| DIELECTRIC CONSTANT OF RESIN SHEET | (-) | 2.8 | 2.7 |
| DIELECTRIC DISSIPATION FACTOR OF RESIN SHEET | (-) | $8.0 \times 10^{-4}$ | $8.5 \times 10^{-4}$ |

[Example 1]

2 kg of the spherical silica particles (A-1) indicated in Table 1 were added to 3 kg of purified water, then stirred for 6 hours at room temperature to prepare a slurry having a particle concentration of 40 mass%. This slurry was introduced to a classification apparatus (product name: SATAKE iClassifier® standard machine, manufactured by Satake Chemical Equipment Manufacturing Co., Ltd.) and wet classification was performed. The classification conditions were set to a rotor circumferential velocity of 26 m/s and a fine particle discharge rate of 10 L/hr. The slurry with the fine particles removed was decanted to remove the supernatant, and the resulting spherical silica particles (B) were dried at 110 °C for 24 hours. After being dried, the spherical silica particles (B) were crushed in a mortar, placed in a 50 g alumina crucible, and heattreated in an electric furnace (product name: Hi Multi® 10000, manufactured by Fuji Dempa Kogyo Co., Ltd.) for 4 hours in a nitrogen atmosphere with the internal temperature of the electric furnace set to 1000 °C. Subsequently, after naturally cooling the inside of the furnace to room temperature, the spherical silica particles (X) were recovered. The specific surface area, the desorbed water molecular weight, the average particle diameter, the average circularity, the surface fractal dimension, and the average particle density of the obtained spherical silica particles (X) were measured by the methods below. Additionally, the surface states of the spherical silica particles (X) were observed by the method below to check for the presence or absence of fine particles on the surfaces. The results are indicated in Table 2.

<Method of Measuring Desorbed Water Molecular Weight>

A gas chromatography/mass spectrometry apparatus (product name: JMS-Q1500GC, manufactured by JEOL Ltd.) and a thermolysis apparatus (product name: PY-3030D, manufactured by Frontier Laboratories Ltd.) were used to raise the temperature of 15 $\mu$g of spherical silica particles from 50 °C to 1000 °C at a temperature increase rate of 25 °C/min in a helium atmosphere. From an obtained mass chromatogram (m/z = 18), an area value in the range from 50 °C to 1000 °C was calculated, and the number of desorbed water molecules was calculated from a calibration line. As the calibration line, area values for the number of desorbed water molecules (m/z = 18) in aluminum hydroxide samples (for example, product name: aluminum hydroxide, manufactured by Kojundo Chemical Laboratory Co., Ltd.) serving as reference samples were used. Specifically, a calibration line was prepared by precisely weighing out to 23 $\mu$g, 122 $\mu$g, and 270 $\mu$g of aluminum hydroxide reference samples by using a microbalance, raising the temperatures under the same conditions as those described above, and measuring the area values of water molecules desorbed from the aluminum hydroxide. The amounts of water on the aluminum hydroxide were calculated by the method below. A high-sensitivity differential-type thermal gravimeter (product name: STA 2500 Regulus, manufactured by Netzsch Corp.) was used to measure the decrease in mass of aluminum hydroxide particles (product name: aluminum hydroxide, ALI06PB, manufactured by Kojundo Chemical Laboratory Co., Ltd.) from 200 °C to 320 °C (temperature increase conditions: from room temperature (23 °C) to 800 °C at a temperature increase rate of 10 °C/min; carrier gas: air; measurement container: platinum pan; sample amount: 13 mg).

<Method of Measuring Specific Surface Area >

A measurement cell was filled with 1 g of spherical silica particles, and the specific surface area of the spherical silica particles was measured by using a fully automated specific surface area/diameter measurement apparatus (product name: Macsorb HM model-1201 (single-point BET method), manufactured by Mountech Co., Ltd.). The deareation conditions preceding the measurement were set to 10 minutes at 200 °C.

<Method of Measuring Average Circularity>

The spherical silica particles were fixed on a sample stand with carbon tape, then coated with osmium. Thereafter, images with a resolution of 1280×1024 pixels captured with a scanning electron microscope (JSM-7001F SHL, manufactured by JEOL Ltd.) at 500-50,000 times magnification were input to a personal computer. From these images, an image analysis apparatus (product name: Image-Pro Premier Ver. 9.3, manufactured by Nippon Roper KK) was used to calculate a projected area (S) and a projected circumference (L) of a single particle, and the circularity was calculated by formula (1) indicated below. The circularities were calculated for 200 arbitrary particles, and the average value was taken as the average circularity.

$$\text{Circularity} = 4\pi S/L^2 \quad \ldots (1)$$

<Method of Measuring Average Particle Diameter >

A laser diffraction-type particle size distribution measurement apparatus (product name: LS 13 320, manufactured by Beckman Coulter, Inc.) was used to measure the average particle diameter. First, 50 cm$^3$ of purified water and 0.1 g of spherical silica particles were placed in a glass beaker, and a dispersion process was performed for 1 minute with an ultrasonic homogenizer (product name: SFX250, manufactured by Branson). The dispersion of spherical silica particles on which the dispersion process was performed was added by using a pipette, one drop at a time, to a laser diffraction-type particle size distribution measurement apparatus, and measurements were performed 30 seconds after adding a prescribed amount. The particle size distribution was calculated from data on the optical intensity distribution of diffracted/scattered light from the spherical silica particles, detected with a sensor in the laser diffraction-type particle size distribution measurement apparatus. The average particle diameter was calculated from the particle size diameter corresponding to a cumulative value of 50% in a volume-based cumulative particle size distribution of the measured particle diameters.

<Method of Measuring Average Particle Density>

2.0 g of spherical silica particles were placed in a measurement sample cell and the average particle density was measured by a gas (helium) replacement method, using a dry-type pycnometer (product name: AccuPyc II 1340, manufactured by Shimadzu Corp.).

<Method of Measuring Surface Fractal Dimension>

The spherical silica particles were set, as is, in a transmission-measuring sample cell of an X-ray diffraction apparatus (product name: SmartLab, manufactured by Rigaku Corp.) and the particles were measured under the conditions indicated below by ultra-small angle X-ray scattering (USAXS). Additionally, at the time of analysis, background removal and desmearing were performed. The desmearing process was performed by using analysis software (for example, product name: Particle size and pore size analysis software NANO-Solver, manufactured by Rigaku Corp.).

X-ray tube: Cu Kα

Tube voltage/tube current: 45 kV/200 mA

Detector: Scintillation counter

Scanning range: 0.00-0.50 deg

Scanning steps: 0.0006 deg

Scanning speed: 0.03 deg/min

Incident-side analyzing crystals: Ge(220) × 2

Reception-side analyzing crystals: Ge(220) × 2

<Method of Calculating Surface Fractal Dimension>

The surface fractal dimension was calculated by the method below. First, formula (2) below was used to convert the scattering angle 2θ to the scattering vector q. The measuring X-ray wavelength λ was 0.154 nm.

$$q = 4\pi\sin\theta/\lambda \quad \dots (2)$$

Next, a double logarithmic graph indicating the relationship between the scattering vector q and the intensity I(q) for the background-removed and desmeared USAXS pattern was prepared, and a power approximation was performed for q = 0.0124-0.0627 $nm^{-1}$ (2θ = 0.174-0.0882°). The exponential part α of this approximation formula was substituted into the following formula (3) to calculate the surface fractal dimension (Ds).

$$Ds = 6 + \alpha \quad \dots (3)$$

<Observation of Particle Surface>

The surfaces of the spherical silica particles (X) were observed with an electron microscope to evaluate them for the presence or absence of fine particles on the particle surfaces.

(Evaluation Criteria)

Pass: Fine particles were removed from the spherical silica particle (X) surfaces and surface unevenness were made small.
Fail: Large amounts of fine particles were adhered to the spherical silica particle (X) surfaces.
The dielectric properties when a resin was filled with the obtained spherical silica particles (X) were evaluated by the method below.

<Evaluation of Dielectric Properties (Dielectric Constant and Dielectric Dissipation Factor>

The spherical silica particles (X) and a polyethylene resin powder (product name: Flo-thene® UF-20S, manufactured by Sumitomo Seika Chemicals Co., Ltd.) were weighed out so that the filled content of the spherical silica particles (X) became 40 vol%, and a vibration-type mixer (manufactured by Resodyn Corp.) was used to mix the materials at an acceleration of 60G for a processing time of 2 minutes to obtain a resin composition. The obtained resin composition was introduced to a metal frame having a diameter of 3 cm in an amount such that the thickness became approximately 0. 3 mm, and a sheet was formed under conditions of 140 °C, 5 minutes, and 30,000 N in a nanoimprint apparatus (product name: X-300, manufactured by Scivax Corp.). The obtained sheet was cut out to a size of 1.5 cm × 1.5 cm to obtain an evaluation sample.
Next, a 36 GHz cavity resonator (manufactured by Sumtec, Inc.) was connected to a vector network analyzer (product name: 85107, manufactured by Keysight Technologies), the evaluation sample was placed so as to cover a hole with a diameter of 10 mm provided in the cavity resonator, and the resonance frequency (f0) and the unloaded Q value (Qu) were measured. Each time a measurement was made, the evaluation sample was rotated by 60 degrees and similar measurements were repeated five times. The average values of the obtained f0 and Qu values were taken as the measurement values, and analysis software (software manufactured by Sumtec, Inc.) was used to calculate the dielectric constant from f0 and to calculate the dielectric dissipation factor (tanδc) from Qu. The measurements were made under the conditions of a measurement temperature of 20 °C and a humidity of 60% RH. The obtained dielectric constant and dielectric dissipation factor values were evaluated under the evaluation criteria below. The results are shown in Table 2.

(Evaluation Criteria)

<Dielectric Constant>

3 points: Dielectric constant equal to or lower than 3.0
2 points: Dielectric constant higher than 3.0 and equal to or lower than 3.2
1 point: Dielectric constant higher than 3.2 and equal to or lower than 3.4
0 points: Dielectric constant higher than 3.4

<Dielectric Dissipation Factor>

3 points: Dielectric dissipation factor lower than $4.0 \times 10^{-4}$
2 points: Dielectric dissipation factor equal to or higher than $4.0 \times 10^{-4}$ and lower than $4.5 \times 10^{-4}$
1 point: Dielectric dissipation factor equal to or higher than $4.5 \times 10^{-4}$ and lower than $5.0 \times 10^{-4}$
0 points: Dielectric dissipation factor equal to or higher than $5.0 \times 10^{-4}$

<Overall Evaluation>

The number of points for the dielectric constant and the dielectric dissipation factor were totaled to evaluate the dielectric properties in accordance with the criteria below.
Excellent: The number of points for dielectric constant and dielectric dissipation factor were both 3 points (total of 6 points).
Good: The number of points for either dielectric constant or dielectric dissipation factor was 3 points, and the number of points for the other was 2 points (total of 5 points).
Fair: The number of points for dielectric constant and dielectric dissipation factor were both 2 points (total of 4 points).
Poor: The number of points for either dielectric constant or dielectric dissipation factor was less than 2 points (total of 4 points or less).

[Examples 2 and 3, and Comparative Examples 1 to 4]

Spherical silica particles (X) were prepared under the production conditions indicated in Table 2. Comparative Examples 1, 2, and 4 are examples in which the spherical silica particles were produced without performing step (i) (classification step). The specific surface areas, the desorbed water molecular weights, the average particle diameters, the average circularities, the surface fractal dimensions, and the average particle densities of the spherical silica particles (X) of the respective examples were measured by methods similar to those in Example 1. Additionally, the surface states and the dielectric properties of the particles were evaluated by methods similar to those in Example 1. The results are shown in Table 2.

[Example 4]

Spherical silica particles (X) were produced under the production conditions shown in Table 2. With respect to 100 parts by mass of the obtained spherical silica particles (X), 1 part by mass of hexamethyldisilazane (described as "HMDS" in Table 2) (product name: SZ-31, manufactured by Shin-Etsu Chemical Co., Ltd.) was added as a surface treatment agent. Thereafter, the materials were mixed for 2 minutes at an acceleration of 60G in a vibration mixer (product name: LabRAM II, manufactured by Resodyn Corp.), then the mixed powder was dried in a mixed powder vacuum dryer for 24 hours at 120 °C in an environment below -133 Pa to obtain surface-treated spherical silica particles (X). The specific surface area, the desorbed water molecular weight, the average particle diameter, the average circularity, the surface fractal dimension, and the average particle density of the obtained spherical silica particles (X) were measured by methods similar to those in Example 1. Additionally, the surface state and the dielectric properties of the particles were evaluated by methods similar to those in Example 1. The results are shown in Table 2.

[Example 5]

Spherical silica particles (X) were produced under the production conditions shown in Table 2. With respect to 100 parts by mass of the obtained spherical silica particles (X), 1 part by mass of vinyltriethoxysilane (described as "Vinyl" in Table 2) (product name: KBE-1003, manufactured by Shin-Etsu Chemical Co., Ltd.) was added as a surface treatment agent. Thereafter, the materials were mixed for 2 minutes at an acceleration of 60G in a vibration mixer (product name: LabRAM II, manufactured by Resodyn Corp.), then the mixed powder was dried in a mixed powder vacuum dryer for 24 hours at 120 °C in an environment below -133 Pa to obtain surface-treated spherical silica particles (X). The specific surface area, the desorbed water molecular weight, the average particle diameter, the average circularity, the surface fractal dimension, and the average particle density of the obtained spherical silica particles (X) were measured by methods similar to those in Example 1. Additionally, the surface state and the dielectric properties of the particles were evaluated by methods similar to those in Example 1. The results are shown in Table 2.

[Table 2]

| | | | EXAMPLE 1 | EXAMPLE 2 | EXAMPLE 3 | EXAMPLE 4 | EXAMPLE 5 | COMP. EX 1 | COMP. EX 2 | COMP. EX 3 | COMP. EX. 4 |
|---|---|---|---|---|---|---|---|---|---|---|---|
| PRODUCTION CONDITIONS | SPHERICAL SILICA PARTICLES | (-) | (A-1) | (A-1) | (A-2) | (A-1) | (A-1) | (A-2) | (A-2) | (A-1) | (A-2) |
| | STEP (i) | CLASSIFICATION TYPE (-) | | | WET | | | NONE | NONE | WET | NONE |
| | | ROTOR CIRCUMFERENTIAL VELOCITY (m/s) | 26 | 20 | 26 | 26 | 26 | NONE | NONE | 30 | NONE |
| | STEP (ii) | HEATING TEMPERATURE (°C) | 1000 | 1000 | 1000 | 1000 | 1000 | 1000 | 1000 | 1300 | 1200 |
| | | HEATING TIME (hr) | 3 | 3 | 6 | 3 | 3 | 3 | 3 | 6 | 8 |
| | | ATMOSPHERE (-) | NITROGEN | NITROGEN | NITROGEN | NITROGEN | NITROGEN | NITROGEN | AIR | VACUUM | VACUUM |
| | OTHER | SURFACE TREATMENT STEP (-) | NONE | NONE | NONE | PRESENT HMDS | PRESENT VINYL | NONE | NONE | NONE | NONE |
| PHYSICAL PROPERTY | SPECIFIC SURFACE AREA (m²/g) | | 0.7 | 1.2 | 1.8 | 0.7 | 0.7 | 3.3 | 3.2 | 0.4 | 3.1 |
| | DESORBED WATER MOLECULAR WEIGHT (mmoL/g) | | 0.004 | 0.003 | 0.001 | 0.004 | 0.004 | 0.012 | 0.014 | 0.0005 | 0.008 |
| | AVERAGE CIRCULARITY (-) | | 0.95 | 0.95 | 0.96 | 0.95 | 0.94 | 0.95 | 0.95 | 0.92 | 0.90 |
| | AVERAGE PARTICLE DENSITY (g/cm³) | | 2.2 | 2.2 | 2.2 | 2.2 | 2.2 | 2.2 | 2.2 | 2.3 | 2.3 |
| | AVERAGE PARTICLE DIAMETER (pm) | | 4.1 | 5.2 | 2.5 | 4.0 | 4.5 | 4.2 | 4.4 | 5.1 | 5.6 |
| | SURFACE FRACTAL DIMENSION (-) | | 1.8 | 2.2 | 2.0 | 1.6 | 1.1 | 2.5 | 2.5 | 1.8 | 2.6 |
| | PARTICLE SURFACE CONDITION (-) | | PASS | PASS | PASS | PASS | PASS | FAIL | FAIL | PASS | FAIL |

| | | | EXAMPLE 1 | EXAM-PLE 2 | EXAM-PLE 3 | EXAMPLE 4 | EXAMPLE 5 | COMP. EX 1 | COMP. EX. 2 | COMP. EX. 3 | COMP. EX. 4 |
|---|---|---|---|---|---|---|---|---|---|---|---|
| EVALUA-TION RE-SULT | DIELECTRIC CON-STANT OF RESIN SHEET | (-) | 2.8 | 2.8 | 2.8 | 2.8 | 2.8 | 2.8 | 2.8 | 2.8 | 2.8 |
| | DIELECTRIC CONSTANT EVALUATION RESULT | (POINTS) | 3 | 3 | 3 | 3 | 3 | 3 | 3 | 3 | 3 |
| | DIELECTRIC DISSIPATION FACTOR OF RESIN SHEET | (-) | $3.8 \times 10^{-4}$ | $4.1 \times 10^{-4}$ | $4.2 \times 10^{-4}$ | $3.7 \times 10^{-4}$ | $3.8 \times 10^{-4}$ | $4.8 \times 10^{-4}$ | $5.0 \times 10^{-4}$ | $4.8 \times 10^{-4}$ | $4.1 \times 10^{-4}$ |
| | DIELECTRIC DISSIPA-TION FACTOR EVALUA-TION RESULT | (POINTS) | 3 | 2 | 2 | 3 | 3 | 1 | 0 | 1 | 1 |
| | OVERALL EVALUATION | (POINTS) | 6 | 5 | 5 | 6 | 6 | 4 | 3 | 4 | 4 |
| | | (-) | EXCEL-LENT | GOOD | GOOD | EXCEL-LENT | EXCEL-LENT | UNACCEPTA-BLE | UNACCEPTA-BLE | UNACCEPTA-BLE | UNACCEPTA-BLE |

As indicated in Table 1, the spherical silica particles (X) of Examples 1-5 obtained by the production method according to the present invention had lower dielectric dissipation factors than the spherical silica particles of the comparative examples. Additionally, when the spherical silica particles (X) of Examples 1-5 were observed under an electron microscope, fine particles had been removed from the surfaces of the particles. Meanwhile, in Comparative Examples 1 and 2 on which step (i) was not performed, the values of the dielectric dissipation factors of the resin sheets were high. In Comparative Examples 1 and 2, step (i) was not performed, and thus, fine particles on the spherical silica particles were not able to be removed. For these reasons, it can be surmised that the reduction of polar functional groups and adsorbed water was insufficient, as a result of which the values of the dielectric dissipation factors became worse. Additionally, in Comparative Example 3 in which step (ii) was implemented at 1300 °C, the value of the dielectric dissipation factor of the resin sheet was high. In Comparative Example 3, it can be surmised that the dielectric dissipation factor became worse because the dispersion of particles in the resin sheet was worse than that in the examples, defects increased due to the treatment temperature being high, etc. Furthermore, the spherical silica particles of Comparative Example 4, produced by heat-treating the spherical silica particles (A) for 8 hours at a high temperature of 1200 °C instead of performing step (i), had a high value for the dielectric dissipation factor of the resin sheet. The reason for this can be considered to be because Comparative Example 4 had a high specific surface area and required a high treatment temperature in order to reduce the amount of functional groups and adsorbed water, and as a result thereof, as with Comparative Example 3, the dispersion of particles in the resin sheet was worse than that in the examples, defects increased due to the treatment temperature being high, etc. From the results described above, the spherical silica particles (X) obtained by the production method according to the present invention were confirmed to be able to achieve a lower dielectric dissipation factor when used to fill a resin.

## INDUSTRIAL APPLICABILITY

The production method according to the present invention can produce spherical silica particles that can achieve a lower dielectric dissipation factor when used to fill a resin. Such spherical silica particles can be favorably used as fillers in resin materials, for example, in insulating materials or substrate materials for use in high frequency bands.

## Claims

1. A method for producing spherical silica particles (X), the method comprising a step of classifying amorphous spherical silica particles (A), followed by a step of performing a heat treatment at 800-1200 °C.

2. The method for producing spherical silica particles (X) according to claim 1, wherein the classifying step comprises wet classification.

3. The method for producing spherical silica particles (X) according to claim 1 or 2, wherein the classifying step comprises classifying the spherical silica particles (A) and preparing spherical silica particles (B) having a surface fractal dimension of 1.0-2.3.

4. The method for producing spherical silica particles (X) according to any one of claims 1 to 3, wherein the classifying step comprises removing foreign substances from surfaces of the spherical silica particles (A).

5. The method for producing spherical silica particles (X) according to any one of claims 1 to 4, wherein the spherical silica particles (A) are amorphous spherical silica particles obtained by a powder melting method.

6. The method for producing spherical silica particles (X) according to any one of claims 1 to 5, wherein the classifying step involves wet classification, and the wet classification is performed by using a slurry containing the spherical silica particles (A) and a dispersion medium including at least water.

7. The method for producing spherical silica particles (X) according to any one of claims 1 to 6, wherein the spherical silica particles (X) have a specific surface area of 0.1-2.0 $m^2/g$.

8. The method for producing spherical silica particles (X) according to any one of claims 1 to 7, wherein the average particle diameters and the specific surface areas of the spherical silica particles (A) and the spherical silica particles (X) satisfy the following conditions (1) and (2):

condition (1), that a ratio $((D \times 50)/(Da50))$ of the average particle diameter $(D \times 50)$ of the spherical silica particles (X) to the average particle diameter (Da50) of the spherical silica particles (A) is 0.8 or higher and 1.2 or lower; and condition (2), that a ratio ((Sx)/(Sa)) of the specific surface area (Sx) of the spherical silica particles (X) to the specific surface area (Sa) of the spherical silica particles (A) is 0.2 or higher and 0.6 or lower.

[FIG. 1]

[FIG. 2]

| INTERNATIONAL SEARCH REPORT | International application No. |
|---|---|
| | **PCT/JP2022/037587** |

**A.    CLASSIFICATION OF SUBJECT MATTER**

*C01B 33/18*(2006.01)i
FI:    C01B33/18 Z

According to International Patent Classification (IPC) or to both national classification and IPC

**B.    FIELDS SEARCHED**

Minimum documentation searched (classification system followed by classification symbols)

C01B33/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-38138 A (DENKA COMPANY LIMITED) 11 March 2021 (2021-03-11) paragraphs [0021], [0024], examples 1, 3-6, 9, claim 1 | 1-2, 4-7 |
| A | | 3, 8 |
| A | US 2010/0247914 A1 (JGC CATALYSTS AND CHEMICALS LTD.) 30 September 2010 (2010-09-30) entire text | 1-8 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 November 2022** | **13 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/037587**

| Patent document cited in search report | | | Publication date (day/month/year) | Patent family member(s) | | | Publication date (day/month/year) |
|---|---|---|---|---|---|---|---|
| JP | 2021-38138 | A | 11 March 2021 | US | 2022/0169832 | A1 | |
| | | | | paragraphs [0022], [0025], examples 1, 3-6, 9, claim 1 | | | |
| | | | | WO | 2020/195205 | A1 | |
| | | | | EP | 3950588 | A1 | |
| | | | | CN | 113614036 | A | |
| | | | | KR | 10-2021-0142632 | A | |
| US | 2010/0247914 | A1 | 30 September 2010 | JP | 2009-137806 | A | |
| | | | | entire text | | | |
| | | | | US | 2015/0251150 | A1 | |
| | | | | EP | 2228344 | A1 | |
| | | | | KR | 10-2010-0106335 | A | |
| | | | | WO | 2009/072218 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016031823 A1
- JP 2926348 B
- JP 2020097498 A
- JP 2020138880 A

**Non-patent literature cited in the description**

- *International Materials Reviews,* 2015, vol. 60 (70